# EUROPÄISCHE PATENTSCHRIFT

(11) **EP 0 614 706 B1**
(45) Veröffentlichungstag und Bekanntmachung des Hinweises auf die Patenterteilung: **29.12.1997**
(21) Anmeldenummer: 94890055.0
(22) Anmeldetag: 11.03.1994
(51) Int. Cl.: B07B 13/11, B07B 13/00

(54) **Vorrichtung zur Unterteilung eines Teilgemisches**
Device for sorting a mixture of items
Dispositif pour le tri d'un mélange d'éléments

(30) Priorität: 12.03.1993 AT 494/93
(43) Veröffentlichungstag der Anmeldung: 14.09.1994
(73) Patentinhaber: TECHNISCHES BÜRO ING. REINHARD GÖSCHL, 2824 Seebenstein (AT)
(72) Erfinder: Göschl, Reinhard, Ing., A-2824 Seebenstein (AT)
(74) Vertreter: Casati, Wilhelm, Dipl.-Ing.

(56) Entgegenhaltungen:
- WO-A-87/04087
- DE-A- 2 803 684
- DE-A- 3 139 279

## Beschreibung

Die Erfindung bezieht sich auf eine Vorrichtung zur Unterteilung eines Teilgemisches nach Dichte und/oder Korngröße, mit einer geneigten Rüttelplatte, die über Kurbelwellen antreibbar ist und oberhalb welcher die Gutsaufgabe angeordnet ist.

Bei einer bekannten Ausbildung dieser Art, wie sie aus der DE 28 03 684 A1 hervorgeht, ist die gesamte Arbeitsfläche durch zwei Kurbelwellen angetrieben, wobei mehrere in Förderrichtung unterteilte Arbeitstische nebeneinander vorgesehen sind, welche zueinander phasenverschoben arbeiten. Eine solche Ausbildung hat den Nachteil, daß über den gesamten Förderweg die zu trennenden Teilchen gleichförmig behandelt werden, daß also über den gesamten Förderweg nur eine Arbeitsplatte vorliegt, die gleichmäßig rüttelt.

Beim Erfindungsgegenstand ist hingegen die Rüttelplatte quer zur Förderrichtung in einzelne Teilplatten unterteilt, von denen jede über zwei Kurbelwellen gesondert gelagert ist, wobei die Teilplatten durch die Kurbelwellen aufeinander abgestimmt phasenverschoben zur Erzielung einer wellenförmigen Bewegung der Oberfläche der Rüttelplatte angetrieben sind und wobei die Teilplatten untereinander durch flexible Zwischenstücke oder Dichtungskamme verbunden sind. Dadurch werden an den Übergängen zwischen den einzelnen Teilplatten unterschiedliche Wurfcharakteristiken erzeugt, wodurch sich insgesamt eine günstigere Wurfcharakteristik ergibt und damit ein besserer Trenneffekt erzielt wird.

Die DE 31 39 279 A1 zeigt eine Schwingmaschine zum Sieben und/oder Fördern eines Gutes, wobei die Arbeitsfläche in wenigstens zwei in Fließ- oder Förderrichtung des Gutes nebeneinander und/oder hintereinanderliegende, unabhängig voneinander schwingfähige Arbeitsflächen-Segmente unterteilt ist, wobei jedes Arbeitsflächen-Segment eine schwingfähige Lagerung sowie einen antreibbaren Schwingungserreger, z.B. auf Unwuchtbasis, aufweist. Diese Vorrichtung dient lediglich zum Sieben oder einheitlichen Fördern des Gutes in eine Förderrichtung.

Gemäß EP 396 529 A1 erfolgt die Bewegungseinbringung durch eine Vibration. Für die Trennung ist die Richtung des Vibrations-Stoßes wesentlich, der einzelne kleinkörnige Teilchen zu verschiedenen Bewegungsabläufen bringt. Dieses Grundprinzip wird durch verschieden geneigte, nacheinander angeordnete Vibrationstrennflächen erreicht. Eine Trennung aufgrund einer ballistischen Wurfparabel in Abhängigkeit des spezifischen Gewichtes und der Körperform wird bei dieser bekannten Ausbildung nicht erreicht.

Die DE 33 06 769 A1 beschreibt eine Trennung von landwirtschaftlichen Produkten, wobei die Trennwirkung durch eine rotierende Walzenoberfläche erfolgt. Dabei wird die Trennung wesentlich vom Auftreffstellenbereich und der dort entstehenden Komponenten-Aufteilung der verschiedenen Auftreffkräfte beeinflußt. Die hauptsächliche Trennwirkung erfolgt durch die Umsetzung einer Kraftvektor-Komponente vom Trennaggregat auf die Einzelteile des Materials. Die Materialform und das spezifische Gewicht haben für die Trennung nur untergeordnete Wichtigkeit. Das erfindungsgemäße Trennungsprinzip, nämlich das mehrmalige Aufwerfen der einzelnen Materialteilchen und die Trennung über die ballistische Wurfparabel nach spezifischem Gewicht und Körperform wird in dieser Druckschrift nicht erwähnt und scheint auch nicht maßgeblich für das Trennprinzip zu sein.

In der DE 38 04 190 A1 wird eine Vorrichtung zur Klassierung eines Stromes von Partikeln speziell zur Entfernung von Hartstoffen aus Kompostfraktionen beschrieben. Dabei wird der Trenneffekt ähnlich wie bei der vorstehend beschriebenen DE 33 06 769 A1 durch die Rotation von übereinanderliegenden Zylindern erzielt. Die Trennleistung wird durch das unterschiedliche Haftvermögen an der Oberfläche der Trommel erreicht. Ein Pralleffekt selbst ist nicht vorgesehen und auch nicht erwünscht. Es ist dies eine wesentlich unterschiedliche Trenntechnik gegenüber der des Erfindungsgegenstandes.

Aus der WO 87/04087 geht eine Anlage zum Trennen eines Gutgemisches hervor, bei welcher eine Rüttelplatte vorgesehen ist, die quer zur Förderrichtung des Gutes abgeknickt ist. Oberhalb dieser Rüttelplatte ist eine Zuführeinrichtung vorgesehen, deren Ende aus in Förderrichtung divergierenden Stäben gebildet ist, wobei der Endbereich der Stäbe in Förderrichtung des Gutes über die Kickstelle der Rüttelplatte reicht. Diese als Finger bezeichneten Stäbe sind in verschiedenen Längen, Abständen und Neigungen angeordnet, so daß durch diese Finger eine Vortrennung des Materials erzielt wird. Damit treffen die Teilchen unterschiedlicher Größe in Förderrichtung des Gutes unterschiedlich weit von dem Ende der Rüttelplatte entfernt auf diese auf, u. zw. vor oder nach deren Knickstelle. Dies bestimmt dann, in welche Richtung die Teilchen auf der Rüttelplatte wandern.

Vorteilhafterweise können die Oberflächen der Teilplatten wenigstens über Teilbereiche der Rüttelplatte zueinander und zur Gesamtneigung der Rüttelplatte parallel verlaufen. Dadurch ergibt sich der erwünschte Trenneffekt auch bei Gemischen, bei welchen die spezifischen Gewichte der einzelnen Teilchen nicht so stark differieren. Schließlich können die Kurbelwellen benachbarter Teilplatten um einen Winkel von etwa 45° gegeneinander verschwenkt sein, wodurch im Hinblick auf die Phasenverschiebung der günstigste Trenneffekt erreicht ist.

In der Zeichnung ist ein Ausführungsbeispiel des Erfindungsgegenstandes dargestellt.
Fig. 1 zeigt schematisch den Längsschnitt durch eine gesamte erfindungsgemäße Vorrichtung.

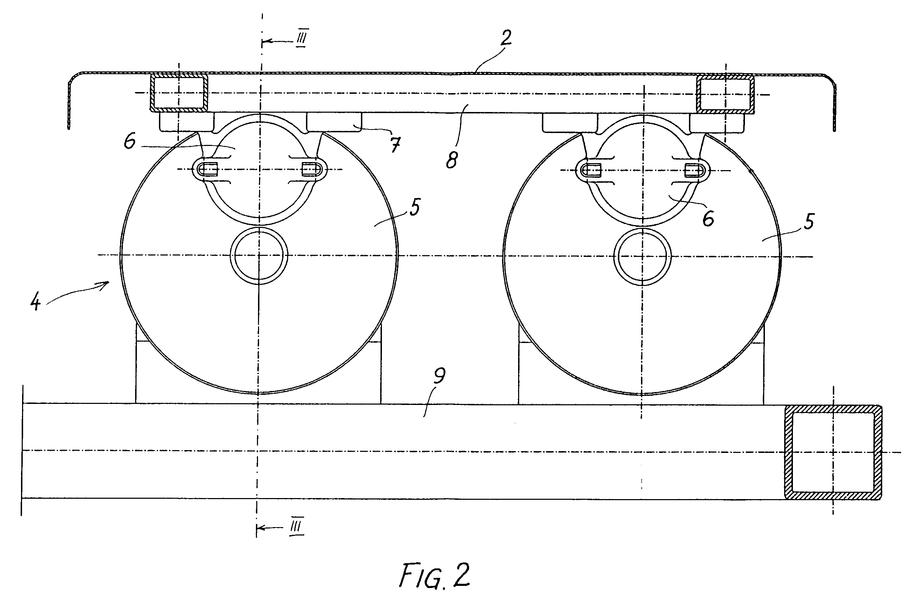

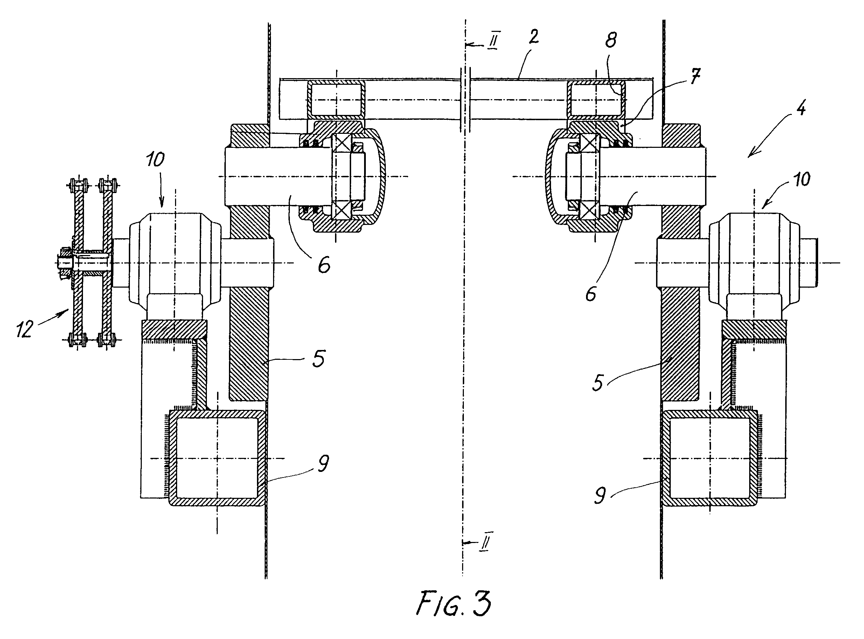

Fig. 2 gibt eine Teilplatte mit Antrieb in größerem Maßstab gemäß Schnitt II-II der Fig. 3 wieder.
Fig. 3 ist ein Schnitt nach Linie III-III der Fig. 2.

Mit 1 ist generell eine Rüttelplatte bezeichnet, die in einzelne Teilplatten 2 unterteilt ist. Diese Teilplatten 2 sind über flexible Zwischenstücke 3 miteinander verbunden, u.zw. deshalb, um das Durchfallen einzelner zu fördernder Teile zwischen den Teilplatten 2 zu verhindern. Anstelle der dargestellten flexiblen Zwischenstücke 3 können nicht dargestellte Dichtungskämme vorgesehen sein, bei welchen an den jeweiligen Teilplatten montierte Kämme mit ihren Zähnen ineinandergreifen und solcherart die Zwischenräume zwischen den Teilplatten so überbrücken, daß ein Durchfallen von Fördergut verhindert ist. Die Teilplatten 2 sind untereinander getrennt angetrieben, u.zw. über Kurbeltriebe 4, u.zw. derart, daß jede der Teilplatten 2 über zwei Kurbelwellen gesondert gelagert ist. Diese Kurbelwellen sind durch Scheiben 5 gebildet, an denen exzentrisch Kurbelzapfen 6 angebracht sind, welche in Lagerungen 7, die an einem Tragrahmen 8 der Teilplatten 2 angreifen, gelagert sind. Die einzelnen Antriebe 4 sind an einem Rahmen 9 über Lager 10 gelagert, welcher Rahmen 9 über ein Gestell 11 am Boden abgestützt ist. Der Antrieb der Kurbelwellen bzw. Kurbelscheiben 5 erfolgt über Riemenantriebe 12, welche zueinander synchron verlaufen.

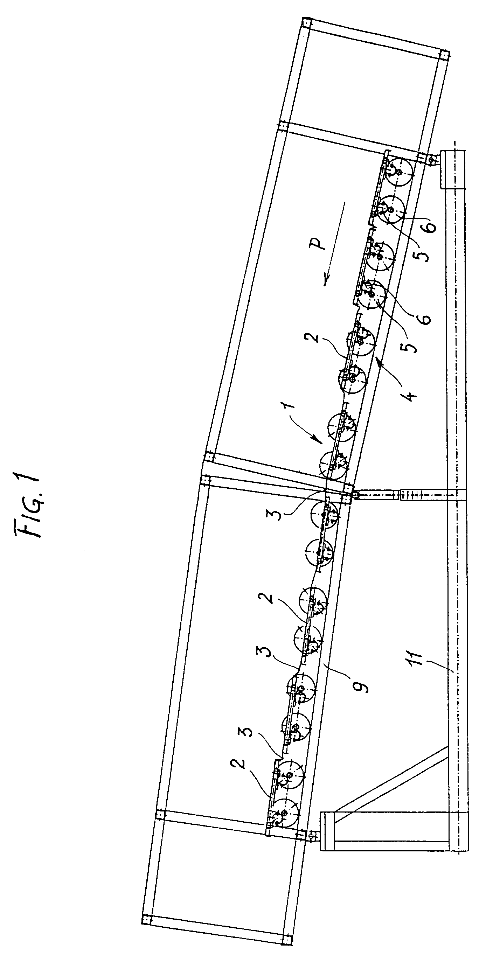

Bei Betrieb der Vorrichtung erfolgt ein phasenverschobenes Schwingen der Teilplatten 2 der Rüttelplatte 1, sodaß eine wellenförmige Bewegung über den Gesamtverlauf der Rüttelplatte 1 verlauft. Der Transport erfolgt dabei in Richtung P (Fig. 1), wobei die leichteren Teile nach oben gefördert und die schwereren Teile am unteren Ende der Rüttelplatte abfallen.

Die Gutaufgabe erfolgt dabei im unteren Drittel des Förderweges, wobei für eine noch bessere Trennung die Rüttelplatte 1 in zwei Abschnitte unterteilt ist, von denen der untere Teil eine etwas größere Steigung aufweist als der obere Teil. Auch diese Maßnahme dient der besseren Trennung des Stoffgemisches.

## Patentansprüche

1. Vorrichtung zur Unterteilung eines Teilgemisches nach Dichte und/oder Korngröße, mit einer geneigten Rüttelplatte, die über Kurbelwellen antreibbar ist und oberhalb welcher die Gutsaufgabe angeordnet ist, dadurch gekennzeichnet, daß die Rüttelplatte (1) quer zur Förderrichtung (P) in einzelne Teilplatten (2) unterteilt ist, von denen jede über zwei Kurbelwellen (5) gesondert gelagert ist, wobei die Teilplatten (2) durch die Kurbelwellen (5) aufeinander abgestimmt phasenverschoben zur Erzielung einer wellenförmigen Bewegung der Oberfläche der Rüttelplatte (1) angetrieben sind, und wobei die Teilplatten (2) untereinander durch flexible Zwischenstücke (3) oder Dichtungskämme verbunden sind.

2. Vorrichtung nach Anspruch 1, dadurch gekennzeichnet, daß die Oberflächen der Teilplatten (2) wenigstens über Teilbereiche der Rüttelplatte (1), zueinander und zur Gesamtneigung der Rüttelplatte (1) parallel verlaufen.

3. Vorrichtung nach Anspruch 1 oder 2, dadurch gekennzeichnet, daß die Kurbelwellen (5) benachbarter Teilplatten (2) um einen Winkel von etwa 45° gegeneinander verschwenkt sind.

## Claims

1. A device for separating a particle mixture according to density and/or grain size, with an inclined vibratory plate that can be driven by crankshafts and above which the stock feed is located, characterized in that the vibratory plate (1) is divided across the direction of conveyance (P) into individual partial plates (2), each of which is mounted separately on two crankshafts (5), where the partial plates (2) are driven by the crankshafts (5) coordinated with each other with a phase shift to achieve an undulating movement of the surface of the vibratory plate (1), and where the partial plates (2) are interconnected by flexible transition pieces (3) or sealing combs.

2. A device according to Claim 1, characterized in that the surfaces of the partial plates (2) run parallel to each other at least over partial areas of the vibratory plate (1) and parallel to the overall inclination of the vibratory plate (1).

3. A device according to Claim 1 or 2, characterized in that the crankshafts (5) of neighboring partial plates (2) are angularly adjusted toward each other by an angle of approximately 45°.

## Revendications

1. Dispositif pour le classement d'un mélange partiel en fonction de sa densité et/ou de sa granulométrie avec une plaque vibrante que peuvent entraîner des vilebrequins et au-dessus de laquelle se trouve l'alimentation en matériau, caractérisé en ce que, transversalement au sens d'acheminement (P), la plaque vibrante (1) est subdivisée en plaques partielles individuelles (2) montées chacune séparément sur paliers au moyen de deux vilebrequins (5), ces plaques partielles (2) étant d'une part entraînées par les vilebrequins (5) en coordination les unes par rapport aux autres et de façon déphasée de manière à obtenir un mouvement ondulatoire de la surface de la plaque vibrante (1), et d'autre part reliées les unes aux autres au moyen de raccords (3) flexibles ou de cames d'étanchéité.

2. Dispositif selon la revendication 1 caractérisé en ce que les surfaces des plaques partielles (2) sont parallèles les unes aux autres et par rapport à l'inclinaison totale de la plaque vibrante (1), ce au moins sur des parties de cette dernière.

3. Dispositif selon la revendication 1 ou 2 caractérisé en ce que les vilebrequins (5) de plaques partielles (2) adjacentes sont orientées angulairement les uns par rapport aux autres selon un angle d'environ 45°.
